# EUROPEAN PATENT APPLICATION

(11) **EP 1 238 885 A1**
(43) Date of publication of application: **11.09.2002**
(21) Application number: 02251331.1
(22) Date of filing: 26.02.2002
(51) Int. Cl.: B62B 5/00, B62B 3/00

(54) **Carriage**

(30) Priority: 09.03.2001 GB 0105821; 13.03.2001 GB 0106099
(71) Applicant: Medibo Medical Products N.V., 3930 Hamont - Achel (BE)
(72) Inventor: Van Den Broek, Wim, 3920 Lommel (BE); Bollen, Niels, 3941 Hechtel-Eksel (BE); Bollen, Jos, 3941 Hechtel-Eksel (BE)
(74) Representative: Higgins, Michael Roger

(57) **Abstract**

A carriage is provided with castors (14), a power driven wheel (18) at one end of the carriage (10), a support element (17) supporting the wheel (18) and a raising and lowering mechanism for raising the support element (17) and thus the wheel (18) out of engagement with the ground and for lowering the support element (17) and thus the wheel (18) into engagement with the ground. The support element (17) is angularly displaceable about a vertical axis (B) to turn the wheel (18) to steer the carriage (10) when the power driven wheel (18) is in engagement with the ground. Means may also be provided for releasably locking a castor (14) at the other end of the carriage (10) in a position in which it will encourage the carriage (10) to move in a straight ahead direction when the power driven wheel (18) is in engagement with the ground. The carriage may be in the form of an invalid hoist, shopping trolley or bed.

## Description

This invention relates to carriages provided with castors and more particularly but not exclusively to carriages in the form of invalid hoists, shopping trolleys and beds.

According to a first aspect of the present invention, there is provided a carriage provided with castors, a power driven wheel at one end of the carriage, a support element supporting the wheel and a raising and lowering mechanism for raising the support element and thus the wheel out of engagement with the ground and for lowering the support element and thus the wheel into engagement with the ground, wherein the support element is angularly displaceable about a vertical axis to turn the wheel to steer the carriage when the power driven wheel is in engagement with the ground.

Preferably, the carriage also comprises means for releasably locking a castor at the other end of the carriage in a position in which it will encourage the carriage to move in a straight ahead direction when the power driven wheel is in engagement with the ground. In this case, preferably, the means comprises a locking device associated with the castor and a Bowden cable connected between the locking device and the raising and lowering mechanism.

Preferably, the support element for the power driven wheel is an upstanding element angularly displaceable and raisable and lowerable within an upstanding tubular member. In this case, the support element is angularly displaceable by a handle connected to the upper end of the upstanding support element. Also in this case, the handle is preferably connected to the upper end of the upstanding support element by an over centre mechanism which allows the handle to raise or lower the upstanding support element. The handle may be pivotable between a first position in which it extends generally horizontally and in which the wheel is in engagement with the ground and a second position in which it depends generally vertically and in which the wheel is out of engagement with the ground. In this case, releasable locking means may be provided to lock the handle in its first position.

According to a second aspect of the present invention, there is provided a carriage provided with castors, a power driven wheel at one end of the carriage, a support element supporting the wheel, a raising and lowering mechanism for raising the support element and thus the wheel out of engagement with the ground and for lowering the support element and thus the wheel into engagement with the ground, and means for releasably locking a castor at the other end of the carriage in a position in which it will encourage the carriage to move in a straight ahead direction when the power driven wheel is in engagement with the ground.

Preferably, the releasable locking means comprises a locking device associated with the castor and a Bowden cable connected between the locking device and the raising and lowering mechanism.

The present invention will now be more particularly described, by way of example, with reference to the accompanying drawings, wherein:
Figure 1 is a partial schematic side view of one embodiment of a carriage in the form of an invalid hoist when in a first condition, in accordance with the present invention;
Figure 2 is a view similar to that of Figure 1 when in a second condition;
Figure 3a is a schematic plan view of a castor of the carriage when in the condition shown in Figure 1; and
Figure 3b is a schematic plan view of the castor of the carriage when in the condition shown in Figure 2.

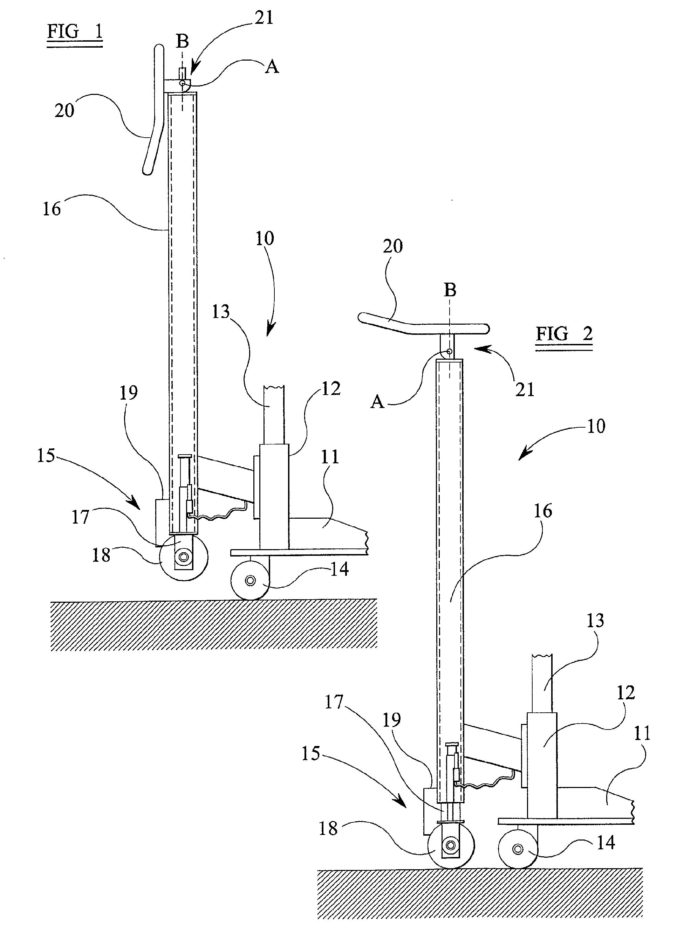

Referring to the drawings, the carriage shown therein is in the form of an invalid hoist comprising a chassis 10 having two side members 11 (only one shown in Figures 1 and 2) connected together at one end by a cross member 12. The cross member 12 supports a mast 13 from which a lifting arm projects (not shown). The lifting arm can be raised or lowered or pivoted upwards and downwards to lift or lower a patient supported by a sling.

The chassis 10 also has four castors 14, two at the rear end of the chassis 10 adjacent to the cross member 12 (only one shown in Figures 1 and 2), and one at the forward end of each of the two side members 11.

A motorised drive 15 is provided at the rear end of the chassis 10. This motorised drive 15 comprises an upstanding tubular column 16, an elongate upstanding support element 17 mounted within the column 16, a wheel 18 supported at the lower end of the upstanding support element 17, a motor and gear box unit 19 for driving the wheel 18 and a handle 20 connected to the upper end of the upstanding support element 17.

The handle 20 is connected to the upstanding support element 17 by an over centre mechanism, generally referenced at 21, and is pivotable about a horizontal axis A to raise or lower the support element 17 and with it the wheel 18. This mechanism enables the wheel 18 to be lowered into engagement with the ground, when desired, or raised above the ground so that the chassis 10 can be propelled manually. The handle 20 is also pivotable about a vertical axis B to enable the power driven wheel 18 to steer the chassis 10.

As shown in Figure 2, the handle 20 extends in a generally horizontal direction with the wheel 18 in engagement with the ground and, as shown in Figure 1, the handle depends generally vertically with the wheel out of engagement with the ground. When an attendant or user is steering the hoist with the wheel 18 in engagement with the ground, there is a tendency for the attendant or user to apply a downwards pressure on the handle 20 with the result that the wheel 18 could be raised inadvertently from ground engageable contact. In order to prevent this, the handle 20 may be provided with a releasable locking device to releasably lock it in the position shown in Figure 2. The locking device could be released by a button or latch member on the handle 20.

A power switch (not shown) is provided on the handle 20 for selectively power driving the wheel 18 forwards or backwards.

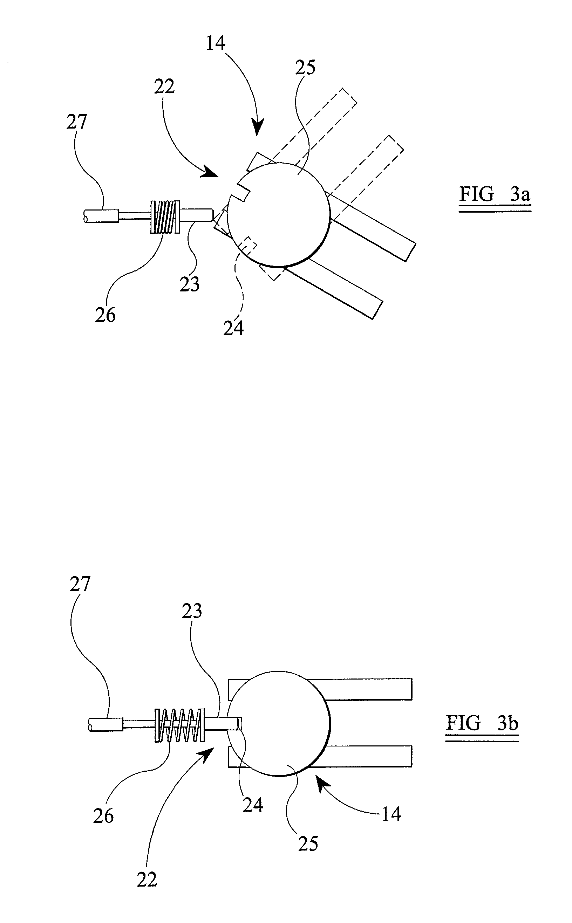

Referring to Figures 3a and 3b, a locking device, generally referenced at 22, is associated with one of the two castors 14 at the forward ends of the side members 11. This locking device 22 enables that castor 14 to be locked in a straight ahead position. The locking device 22 comprises a dog 23 slidable into a slot 24 in a support element 25 for the castor 14. The dog 23 is urged by a spring 26 towards engagement with the slot 24 and is connected to a Bowden cable 27 which passes through the associated side member 11 of the chassis 10 and which is connected at its remote end to the raising and lowering mechanism.

When the power driven wheel 18 is raised above the ground (see Figure 1), the Bowden cable 27 pulls the dog 23 against the urging force of the spring 26 to disengage the dog 23 from the slot 24 (see Figure 3a). An attendant can then manually propel the invalid hoist in conventional manner, i.e. the castor is swivellable about its axis, as shown by the solid and phantom lines in Figure 3a. When the power driven wheel 18 is in engagement with the ground (see Figure 2), tension on the Bowden cable 27 is released and the dog 23 is urged into engagement with the slot 24 in the support element 25 for the castor 14 (see Figure 3b). This locks the castor 14 in a straight ahead position making it easier to propel the chassis 10 in a straight ahead direction. Nevertheless, the chassis 10 can still be steered by angularly displacing the power driven wheel 18.

The carriage could take other forms including but not limited to a shopping trolley and a bed.

The embodiment described above is given by way of example only and various modifications will be apparent to persons skilled in the art without departing from the scope of the invention. For example, the locking device could be activated electromagnetically rather than using a Bowden cable.

## Claims

1. A carriage provided with castors (14), a power driven wheel (18) at one end of the carriage, a support element (17) supporting the wheel and a raising and lowering mechanism (20, 21) for raising the support element and thus the wheel out of engagement with the ground and for lowering the support element and thus the wheel into engagement with the ground, wherein the support element is angularly displaceable about a vertical axis (B) to turn the wheel to steer the carriage when the power driven wheel is in engagement with the ground.

2. A carriage as claimed in claim 1, further comprising means (22, 27) for releasably locking a castor (14) at the other end of the carriage in a position in which it will encourage the carriage to move in a straight ahead direction when the power driven wheel (18) is in engagement with the ground.

3. A carriage as claimed in claim 2, wherein the releasable locking means comprises a locking device (22) associated with the castor and a Bowden cable (27) connected between the locking device and the raising and lowering mechanism.

4. A carriage according to any one of the preceding claims, wherein the support element for the power driven wheel is an upstanding element angularly displaceable and raisable and lowerable within an upstanding tubular member (16).

5. A carriage as claimed in claim 4, wherein the support element (17) is angularly displaceable by a handle (20) connected to the upper end of the upstanding support element.

6. A carriage as claimed in claim 5, wherein the handle (20) is connected to the upper end of the upstanding support element (17) by an over centre mechanism (21) which allows the handle to raise or lower the upstanding support element.

7. A carriage as claimed in claim 5 or claim 6, wherein the handle (20) is pivotable between a first position in which it extends generally horizontally and in which the wheel is in engagement with the ground and a second position in which it depends generally vertically and in which the wheel is out of engagement with the ground.

8. A carriage as claimed in claim 7, wherein releasable locking means are provided to lock the handle in its first position.

9. A carriage provided with castors (14), a power driven wheel (18) at one end of the carriage, a support element (17) supporting the wheel, a raising and lowering mechanism (20, 21) for raising the support element and thus the wheel out of engagement with the ground and for lowering the support element and thus the wheel into engagement with the ground, and means (22, 27) for releasably locking a castor at the other end of the carriage in a position in which it will encourage the carriage to move in a straight ahead direction when the power driven wheel is in engagement with the ground.

10. A carriage as claimed in claim 9, wherein the releasable locking means comprises a locking device (22) associated with the castor and a Bowden cable (27) connected between the locking device and the raising and lowering mechanism.

11. A carriage as claimed in claim 9 or claim 10, wherein the raising and lowering mechanism includes a handle (20) pivotable between a first position in which it extends generally horizontally and in which the wheel is in engagement with the ground and second position in which it depends generally vertical and in which the wheel is out of engagement with the ground.

12. A carriage as claimed in claim 11, wherein releasable locking means are provided to lock the handle in its first position.
